# EUROPÄISCHE PATENTSCHRIFT

(11) **EP 2 557 751 B1**
(45) Veröffentlichungstag und Bekanntmachung des Hinweises auf die Patenterteilung: **30.10.2013**
(21) Anmeldenummer: 11177216.6
(22) Anmeldetag: 11.08.2011
(51) Int. Cl.: H04L 29/06, H04L 29/08

(54) **Verfahren und Vorrichtungen zum Herstellen einer Kommunikation**
Method and devices for producing a communication
Procédé et dispositifs de fabrication d'une communication

(43) Veröffentlichungstag der Anmeldung: 13.02.2013
(73) Patentinhaber: Siemens Aktiengesellschaft, 80333 München (DE)
(72) Erfinder: Heinrich, Andreas, Dr., 81377 München (DE); Heuer, Jörg, Dr., 82041 Oberhaching (DE); Käbisch, Sebastian, 80997 München (DE)

(56) Entgegenhaltungen:
- WO-A1-2011/066585
- GUIDO MORITZ ET AL: "Encoding and Compression for the Devices Profile for Web Services", ADVANCED INFORMATION NETWORKING AND APPLICATIONS WORKSHOPS (WAINA), 2010 IEEE 24TH INTERNATIONAL CONFERENCE ON, IEEE, PISCATAWAY, NJ, USA, 20. April 2010 (2010-04-20), Seiten 514-519, XP031687053, ISBN: 978-1-4244-6701-3
- MORITZ UNIVERSITY OF ROSTOCK G: "DPWS for 6LoWPAN; draft-moritz-6lowapp-dpws-enhancements-00. txt", 18. Dezember 2009 (2009-12-18), DPWS FOR 6LOWPAN; DRAFT-MORITZ-6LOWAPP-DPWS-ENHANCEMENTS-00. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, PAGE(S) 1 - 12, XP015066061, [gefunden am 2009-12-18] * Absatz [0003] *

## Beschreibung

Die Erfindung betrifft Verfahren und Vorrichtungen zum Herstellen einer Kommunikation.

In den vergangenen Jahren hat eine Maschine zu Maschine-Kommunikation, d.h. ein Austauschen von Nachrichten zwischen zwei Recheneinheiten, beispielsweise über das Internet, erheblich zugenommen. Eine Anwendung dieser Maschine zu Maschinen-Kommunikation betrifft beispielsweise drahtlose Sensornetzwerke mit einer Vielzahl von autarken Sensoren. Derartige autarke Sensoren weisen eine kleine Recheneinheit mit einem sehr beschränkten Speicher, z.B. 50 KByte, eine Batterie zur Stromversorgung und eine Drahtlosschnittstelle zur Datenübertragung auf. Die autarken Sensoren stellen Informationen wie beispielsweise Temperatur oder Luftdruck bereit, wobei diese Informationen direkt oder über mehrere autarke Sensoren vermittelt an eine Empfangsstation zur Auswertung versandt werden. In der Fachwelt sind derartige autarke Sensoren unter Anderem als MOTS bekannt. Eine Eigenschaft dieser autarken Sensoren ist, dass sie nur über eine sehr begrenzte Energiekapazität verfügen, beispielsweise gewonnen durch Sonnenlicht. Dadurch bedingt ist ihre Rechenleistung und somit ihr Stromverbrauch stark reduziert. Ein weiteres Anwendungsfeld von autarken Recheneinheiten mit sehr reduzierter Hardware ist ein embedded system, in dem unter Anderem mehrere autarke Recheneinheiten einen Dienst, wie z.B. einen Web-Service, gemeinsam realisieren.

In vielen gängigen drahtgebundenen Systemen wird die Maschine zu Maschine-Kommunikation heute über die Protokolle IP (IP - Internet Protocol), TCP (TCP - Transport Control Protocol), UDP (UDP - Uniform Datagram Protocol) und/oder HTTP (HTTP - Hypertext Protocol) abgewickelt. Diese Protokolle werden in einer Vielzahl von Geräten mit unterschiedlichster Hardware und Betriebssystemen eingesetzt, so dass es wünschenswert ist, dass auch autarke Sensoren über derartige Protokolle Daten austauschen.

Jedoch sind diese Protokolle ohne Rücksicht auf eine bandbreiteneffiziente Darstellung entworfen worden. Daher wurden und werden Kompressionsalgorithmen entwickelt, die zu übertragende Informationen, d.h. Nachrichten, in ihrem Volumen deutlich reduzieren, so dass die zur Übermittlung dieser Nachrichten benötigte Bandbreite als auch Sendeleistung ebenfalls reduziert werden. Ein Beispiel hierzu ist eines durch die IETF (IETF - Internet Engineering Task Force) vorgeschlagenes Kompressionsverfahren Chopan, siehe [1], das eine Reduktion des benötigten Bandbreitenvolumens zur Übertragung von HTTP-Nachrichten erzielt. Daneben gibt es auch Algorithmen, wie beispielsweise EXI (EXI - Efficient XML Interchange), siehe [2], der W3C (W3C - WWW Consortium), das XML-Daten in einer effizienten Weise komprimiert.

Die Druckschrift WO 2011/066585 A1 beschreibt ein weiteres Verfahren zur Komprimierung von HTTP-Datenköpfen.

Es zeigt sich jedoch in der Praxis für autarke Recheneinheiten und autarke Sensoren, dass eine Verwendung der oben genannten Protokolle mit und ohne dazupassende Kompressionsalgorithmen dennoch sehr komplex sein kann und somit ein Hindernis darstellt, die aus der drahtgebundenen Maschine zu Maschine-Kommunikation bekannten Protokolle einzusetzen.

Die Aufgabe der vorliegenden Erfindung ist daher ein Verfahren und eine Vorrichtung anzugeben, die einen Einsatz von Kommunikationsnachrichten unter Verwendung des Protokolls HTTP (= Hyper Text Transfer Protocol) für Kommunikationsgeräte, wie MOTS, mit kleiner Rechenleistung und geringem Stromverbrauch ermöglichen.

Diese Erfindung wird durch die unabhängigen Ansprüche gelöst. Weiterbildungen der Erfindung sind den abhängigen Ansprüchen zu entnehmen.

Die Erfindung betrifft ein Verfahren zum Herstellen einer Kommunikation zwischen zwei Netzwerken, mit folgenden Schritten:

Empfangen einer ersten Nachricht aus dem ersten Netzwerk, wobei die erste Nachricht ein erstes Kopffeld und ein erstes Anwendungsdatenfeld aufweist und das erste Kopffeld Daten gemäß dem Standard Hyper Text Transfer Protocol umfasst; Codieren von zumindest einem der Felder des ersten Kopffelds jeweils als Element und/oder Attribut auf Basis eines XML-Schemas in ein zweites Kopffeld;

Codieren des zweiten Kopffelds in ein drittes Kopffeld auf Basis eines Komprimierungsverfahrens, wobei das Komprimierungsverfahren ein Datenvolumen des zweiten Kopffeld reduziert;

Erstellen einer zweiten Nachricht aufweisend das dritte Kopffeld und das erste Anwendungsdatenfeld; Senden der zweiten Nachricht an das zweite Netwerk.

Das vorliegende Verfahren zeichnet sich dadurch aus, dass das als HTTP (HTTP - Hypertext Transfer Protocol) codierte erste Kopffeld zunächst in eine XML-basierte Darstellung (XML - Markup Language) [3, 4, 5] überführt wird, die ihrerseits mit einem Standard XML-Binär-Komprimierer codiert werden kann. Hierbei ist vorteilhaft, dass die HTTP Syntax in eine XML-basierte Syntax überführt werden kann, die ihrerseits durch ein standardisiertes Komprimierverfahren binär komprimiert wird. Denn der Erfindung liegt die Erkenntnis zugrunde, dass bei einer Maschine zu Maschine-Kommunikation oftmals ein XMLbasiertes Anwendungsdatenfeld mit Informationen übertragen wird, das ihrerseits auch mittels des XML-Binär-Komprimierers komprimierbar ist, so dass ein Synergieeffekt durch Verwendung eines identischen Kompressionsverfahrens für das dritte Kopffeld und das komprimierte Anwendungsdatenfeld der zweiten Nachricht entsteht.

Somit muss nicht, wie heute üblich, für das HTTP-codierte erste Kopffeld ein erster Komprimierungsalgorithmus und für das Datenfeld ein zweiter Komprimierungsalgorithmus auf dem Endgerät installiert und ausgeführt werden. Vielmehr zeichnet sich die Erfindung dadurch aus, dass zum einen durch die Umformung des ersten Kopffeldes in das XML-basierte Kopffeld eine standardisierte Beschreibungssprache, d.h. XML, verwendet werden kann. Somit ist vorteilhaft, dass in einem Endgerät mit geringster Rechenleistung, Speichergröße und sehr beschränkter Energieversorgung nur ein Kompressionsalgorithmus implementiert werden muss, der jedoch in der Lage ist aufgrund der Umformung des ersten Kopffeldes in das XMLcodierten Kopffeldes auch den HTTP Teil der Kommunikationsnachricht zu codieren.

Der Begriff HTTP bezieht sich auf den Standard Hypertext Transfer Protocol HTTP, wie in RFC 1945 für HTTP/1.0 [3] und in RFC 2616 für HTTP/1.1 [4] definiert. Ferner ist die Beschreibungssprache Extensible Markup Language XML spezifiziert durch das World Wide Web Consortium W3C, siehe bspw. [5]. Die Erfindung bezieht sich bzgl. HTTP und XML nicht nur auf die vorgenannten Standardtexte, sondern auch auf zukünftige Weiterbildungen dieser Standardtexte.

Das Schema definiert die Syntax, die Elementnamen und Attribute sowie Wertebereiche für Attribute des zu erstellenden zweiten Kopffeldes. Dabei kann die Erstellung des Schemas spezifisch für das zweite Kopffeld erfolgen oder ausgehend von dem HTTP-Standard für eine Anzahl an Feldern bzw. Parametern des HTTP-Standards oder auch für alle möglichen Felder bzw. Parameter des HTTP-Standards. Das erstellte Schema kann entweder zentral erstellt werden, um im Anschluss an beteiligte Endgeräte weitergeleitet zu werden. Alternativ dazu kann das Schema insbesondere das Schema für die Felder des HTTP-Standards auf jedem Endgerät, welches die zweite Nachricht empfangen oder bereitstellen soll, selber generiert oder bereits während einer Initialisierung des jeweiligen Endgeräts hinterlegt werden, z.B. im ROM (ROM - Read Only Memory). Die Erstellung des Schemas ermöglicht, dass das XML-basierte Kopffeld ohne zusätzlichen Overhead zur Signalisierung möglicher Schemavarianten erstellt werden kann.

Gerade bei der Maschine zu Maschine-Kommunikation weist das Anwendungsdatenfeld XML-basierte Daten auf, beispielsweise zur Signalisierung von Webservices gemäß SOAP-Standard (SOAP - Service Oriented Application Protocol). Hierbei ist vorteilhaft, dass sowohl das HTTP-basierte erste Kopffeld als auch das Anwendungsdatenfeld in identischer Art und Weise komprimiert werden, so dass bei dem Endgerät lediglich ein Komprimierer bzw. Dekomprimierer verwendet muss, der das erste Anwendungsdatenfeld und das zweite Kopffeld analysiert und komprimiert.

Bei der Komprimierung des Anwendungsdatenfelds in das codierte Anwendungsdatenfeld können auch Felder des http-basierten ersten Kopffelds angepasst werden. Ein erstes Feld repräsentiert eine Anzahl an Bytes des Datenfelds. Der Wert dieses ersten Felds wird auf die Anzahl an Bytes des codierten Datenfelds angepasst. Ferner wird ein zweites Feld des http-basierten ersten Kopffelds, welches den Typ des Datenfelds beschreibt, in den Typ des zur Kompression verwendeten Komprimierers angepasst. Hierdurch wird gewährleistet, dass das Endgerät, welches die zweite Nachricht empfängt das dritte Kopffeld und das komprimierte Anwendungsdatenfeld fehlerfrei verarbeiten kann.

Ferner kann ein Endgerät, welches die zweite Nachricht empfängt, in der Lage sein, das dritte Kopffeld in seiner binären Darstellung zu verarbeiten, d.h. auf eine Dekompression und Umformung des XML-basierten Kopffeldes in das HTTP-basierten erste Kopffeld verzichten. Diese Möglichkeit besteht beispielsweise bei Verwendung des durch W3C in Standardisierung befindlichen EXI-Codierers, d.h. Komprimierers. Dies weist den Vorteil auf, dass das Endgerät die zweite Nachricht in seiner komprimierten Form verarbeiten und somit zum einen Rechenleistung zur Dekompression und Überführung in das Format gemäß der ersten Nachricht vermieden werden kann. Zum anderen wird dadurch eine Einsparung an Speicherkapazität erreicht, da das dritte Kopffeld gegenüber dem ersten Kopffeld erheblich reduziertes Speichervolumen aufweist. Insgesamt zeigt sich der Vorteil, dass durch die Verwendung der Darstellung des Kopffeldes mit XML eine sehr flexible Darstellung gegenüber anderen Protokollen, wie Chopan, siehe [1] erzielt wird. Ferner wird durch die Verwendung von XML und des XML-Binär-Komprimierers eine einfache Integration in bestehende Systeme ermöglicht, beispielsweise im Umfeld von Gebäudetechnik.

In einer Erweiterung wird der erste Anwendungsdatenteil gemäß dem Komprimierungsverfahren codiert. Hierdurch kann eine weitere Datenreduktion der zweiten Nachricht erzielt werden. Insbesondere bei Endgeräten mit beschränktem Speicher kann hierdurch ein Speichern der zweiten Nachricht in effizienter Weise ermöglicht werden.

Die Erfindung betrifft auch ein Verfahren zum Herstellen einer Kommunikation zwischen zwei Netzwerken, mit folgenden Schritten:

Empfangen einer zweiten Nachricht aus einem zweiten Netzwerk, wobei die zweite Nachricht ein drittes Kopffeld und ein erstes Anwendungsdatenfeld aufweist und zumindest das dritte Kopffeld gemäß einem Komprimierungsverfahren codiert ist; Decodieren des dritten Kopffelds in ein zweites Kopffeld auf Basis eines zum Komprimierungsverfahren korrespondierenden Dekomprimierungsverfahrens;

Codieren von Elementen und/oder Attributen des zweiten Kopffelds auf Basis eines XML-Schemas in jeweilige Felder, wobei die Felder eine Syntax gemäß dem Standard Hyper Text Transfer Protocol aufweisen und die Felder ein erstes Kopffeld bilden; Erstellen einer ersten Nachricht aufweisend das erste Kopffeld und das erste Anwendungsdatenfeld; Senden der ersten Nachricht an das erste Netwerk.

Dieses Verfahren betrifft das Decodieren der zweiten Nachricht in die erste Nachricht. Die Vorteile sind analog zum zuvor beschriebenen Verfahren zum Herstellen.

Das Verfahren kann dadurch ergänzt werden, dass der erste Anwendungsdatenteil gemäß einem zum Komprimierungsverfahren korrespondierenden Dekomprimierungsverfahren decodiert wird. Hierdurch kann die zweite Nachricht sehr kompakt, d.h. mit wenigen Bits, kodiert werden.

Beide Verfahren werden verzugsweise dadurch erweitert, dass als Komprimierungsverfahren ein Standard Efficient XML Interchange (EXI) oder ein Binäres MPEG-Format für XML (BIM) eingesetzt wird. Hierdurch kann eine Realisierung vereinfacht werden, da auf standardisierte Module, die den jeweiligen Standard realisieren, zurückgegriffen werden. Der Standard Efficient XML Interchange (EXI) ist aus Dokument [2] und der Standard Binäres MPEG-Format für XML (BIM) aus Dokument [6] bekannt.

Zudem umfasst die Erfindung eine Codiervorrichtung zum Herstellen einer Kommunikation zwischen zwei Netzwerken, mit folgenden Einheiten:

Erste Einheit zum Empfangen einer ersten Nachricht aus dem ersten Netzwerk, wobei die erste Nachricht ein erstes Kopffeld und ein erstes Anwendungsdatenfeld aufweist und das erste Kopffeld Daten gemäß dem Standard HyperText Transfer Protocol umfasst;

Zweite Einheit zum Codieren von zumindest einem der Felder der des ersten Kopffelds jeweils als Element und/oder Attribut auf Basis eines XML-Schemas in ein zweites Kopffeld; Dritte Einheit zum Codieren des zweiten Kopffelds in ein drittes Kopffeld auf Basis eines Komprimierungsverfahrens, wobei das Komprimierungsverfahren ein Datenvolumen des zweiten Kopffeld reduziert;

Vierte Einheit zum Erstellen einer zweiten Nachricht aufweisend das dritte Kopffeld und das erste Anwendungsdatenfeld; Fünfte Einheit zum Senden der zweiten Nachricht an das zweite Netwerk.

In einer Erweiterung der Codiervorrichtung umfasst diese ferner eine sechste Einheit, die derart ausgestaltet ist, dass damit Erweiterungen des Verfahrens ausführbar sind.

Schließlich ist eine Decodiervorrichtung zum Herstellen einer Kommunikation zwischen zwei Netzwerken Teil der Erfindung, mit folgenden Einheiten:

Siebte Einheit zum Empfangen einer zweiten Nachricht aus einem zweiten Netzwerk, wobei die zweite Nachricht ein drittes Kopffeld und ein erstes Anwendungsdatenfeld aufweist und zumindest das dritte Kopffeld gemäß einem Komprimierungsverfahren codiert ist;

Achte Einheit zum Decodieren des dritten Kopffelds in ein zweites Kopffeld auf Basis eines zum Komprimierungsverfahrens korrespondierenden Dekomprimierungsverfahrens;

Neunte Einheit zum Codieren von Elementen und/oder Attributen des zweiten Kopffelds auf Basis eines XML-Schemas in jeweilige Felder, wobei die Felder eine Syntax gemäß dem Standard HyperText Transfer Protocol aufweisen und die Felder ein erstes Kopffeld bilden;

Zehnte Einheit zum Erstellen einer ersten Nachricht aufweisend das erste Kopffeld und das erste Anwendungsdatenfeld; Elfte Einheit zum Senden der ersten Nachricht an das erste Netwerk.

Ferner kann die Decodiervorrichtung eine zwölfte Einheit umfassen, die derart ausgestaltet ist, dass damit Erweiterungen des Verfahrens ausführbar sind.

Die Codier- und Decodiervorrichtungen weisen dieselben Vorteile wie die korrespondierenden Verfahren auf.

Die Erfindung und ihre Weiterbildungen werden anhand von Figuren näher dargestellt. Es zeigen:
- Figur 1: schematischer Aufbau einer Kommunikationsnachricht nach dem Stand der Technik
- Figur 2: ein senderseitiges Ablaufdiagramm des erfindungsgemäßen Verfahrens
- Figur 3: ein empfängerseitiges Ablaufdiagramm des erfindungsgemäßen Verfahrens

Elemente mit gleicher Funktion und Wirkungsweise sind in den Figuren mit denselben Bezugszeichen versehen.

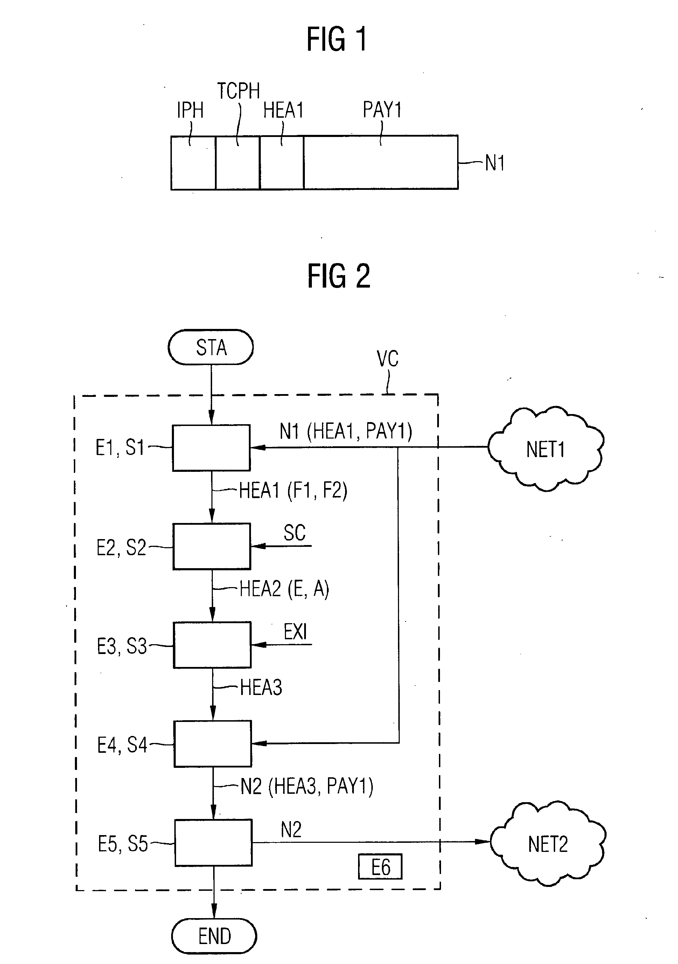

Figur 1 zeigt exemplarisch eine Kommunikationsnachricht, in der Folge als erste Nachricht N1 bezeichnet, mit einem IP-Kopffeld IPH, einem TCP-Kopffeld TCPH, einem ersten Kopffeld HEA1, das Daten gemäß dem Standard HTTP (Hyper Text Transfer Protocol) umfasst, und ein erstes Anwendungsdatenfeld PAY1 gemäß OSI-Schichtenmodell (OSI - Open Standard Interface). Der Begriff Anwendungsdatenfeld wird im Englischen als "pay-load" bezeichnet. Der Begriff Kopffeld entspricht dem englischen Begriff "header field".

Eine derartige Nachricht wird heute üblicherweise bei einer Maschine zu Maschine-Kommunikation als auch bei einer Mensch zu Maschine-Kommunikation, z.B. zum Abruf von Inhalten im World Wide Web, verwendet. Einem Fachmann auf dem Gebiet der Kommunikationstechnik sind die Begriffe IP (Internet Protocol), TCP (Transport Control Protocol) und HTTP hinreichend bekannt, so dass an dieser Stelle auf eine weitere Erläuterung verzichtet wird. Der erste Anwendungsdatenfeld PAY1 kann strukturierte Daten gemäß dem XML-Standard (XML - Extensible Markup Language) aufweisen, die beispielsweise eine SOAP-Nachricht (SOAP - Service Oriented Architecture Protocol) repräsentieren.

Figur 2 zeigt ein beispielhaftes Ablaufdiagramm zur Durchführung des Verfahrens. Dieses Ablaufdiagramm wird im Zustand STA gestartet.

In einem ersten Schritt S1 wird die erste Nachricht N1 aus einem ersten Netzwerk NET1 empfangen. Das erste Netzwerk NET1 ist beispielsweise ein öffentliches Internet oder ein Datenbus innerhalb eines Rechnersystems, der die erste Nachricht N1 zur weiteren Verarbeitung zur Verfügung stellt. Der erste Schritt S1 kann mit einer ersten Einheit E1 implementiert und ausgeführt werden.

In einem zweiten Schritt S2 werden die Daten des ersten Kopffeldes auf Basis eines Schemas SC analysiert und die jeweiligen Felder F1, F2 der Daten als XML Elemente E und/oder Attribute A in einer strukturierten Darstellung wiedergegeben. Das Schema SC beschreibt die Syntax einer oder mehrere Felder bzw. Parameter des HTTP Standards. Einem Fachmann auf dem Gebiet der strukturierten Dokumente ist hinreichend eine Vorgehensweise zum Erstellen von Schemas bekannt, so dass an dieser Stelle auf eine nähere Beschreibung dieses Schrittes verzichtet wird. Durch die Codierung der Felder F1, F2 in strukturierter Darstellung wird ein zweiten Kopffeld HEA2 erzeugt. Der zweite Schritt S2 kann mit einer zweiten Einheit E2 implementiert und ausgeführt werden.

In einem dritten Schritt S3 wird ein Datenvolumen des zweiten Kopffelds HEA2 durch ein Komprimierungsverfahren EXI reduziert. Hierbei eignet sich insbesondere als Komprimierungsverfahren ein Standard "Efficient XML Interchange" oder ein Binäres MPEG-Format für XML (MPEG-Motion Picture Expert Group). Durch diesen Codierungsschritt wird das dritte Kopffeld HEA3 generiert. Der dritte Schritt S3 kann mit einer dritten Einheit E3 implementiert und ausgeführt werden.

In einem vierten Schritt S4 wird eine zweite Nachricht N2 durch das dritte Kopffeld HEA3 und das ersten Anwendungsdatenfeld PAY1 gebildet. Der vierte Schritt S4 kann mit einer vierten Einheit E4 implementiert und ausgeführt werden.

Diese zweite Nachricht N2 wird in einem fünften Schritt S5 an ein zweites Netzwerk NET2 übersandt. Das zweite Netzwerk NET2 ist beispielsweise ein Netzwerk mit MOTS (=autarke drahtlos verbundene Sensoreinheiten) oder ein weiterer Datenbus in einem Rechnersystem, der die zweite Nachricht N2 zur weiteren Verarbeitung übernimmt. Der fünfte Schritt S5 kann mit einer fünften Einheit E5 implementiert und ausgeführt werden.

Das Ablaufdiagramm endet im Zustand END.

Das Verfahren gemäß obiger Ausführung kann derart erweitert werden, dass im vierten Schritt das erste Anwendungsdatenfeld PAY1 der zweiten Nachricht N2 mittels des Komprimierungsverfahrens EXI codiert wird. Diese Erweiterung ist mit einer sechsten Einheit E6 realisierbar.

Eine Codiervorrichtung VC umfasst die Einheiten E1 bis E6 in der oben dargestellten Ausgestaltung.

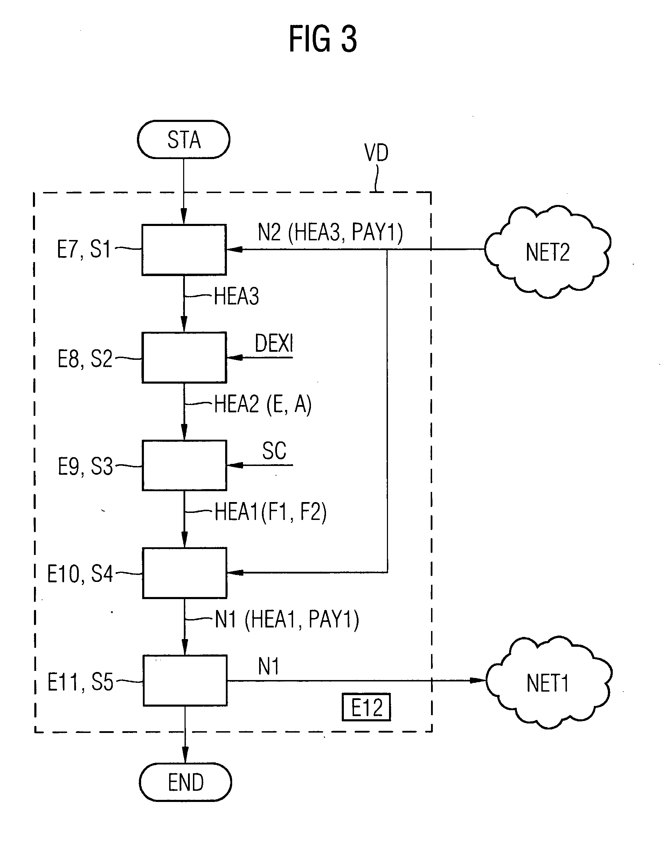

Figur 3 zeigt ein weiteres exemplarisches Ablaufdiagramm des Verfahrens.

In einem Schritt STA wird das Ablaufdiagramm gestartet.

In einem ersten Schritt S1 wird die zweite Nachricht N2 aus dem zweiten Netzwerk NET2 empfangen. Die zweite Nachricht weist das dritte Kopffeld HEA3 und das erste Anwendungsdatenfeld PAY1 auf. Der erste Schritt S1 kann mit einer siebten Einheit E7 implementiert und ausgeführt werden.

In einem zweiten Schritt S2 wird das dritte Kopffeld HEA3 in das zweite Kopffeld HEA2 auf Basis eines zum Komprimierungsverfahren EXI korrespondierenden Dekomprimierungsverfahrens DEXI decodiert. Hierbei eignet sich insbesondere als Dekomprimierungsverfahren ein Standard "Efficient XML Interchange" oder ein Binäres MPEG-Format (BIM) für XML (MPEG-Motion Picture Expert Group). Der zweite Schritt S2 kann mit einer achten Einheit E8 implementiert und ausgeführt werden.

In einem dritten Schritt S3 werden auf Basis des Schemas SC Elemente E und/oder Attribute A des zweiten Kopffelds in Felder F1, F2 des ersten Kopffelds HEA1 codiert. Dabei folgt die Codierung der Felder F1, F2 einer Syntax gemäß dem Standard Hypertext Transfer Protocol. Der dritte Schritt S3 kann mit einer neunten Einheit E9 implementiert und ausgeführt werden.

In einem vierten Schritt S4 wird die erste Nachricht N1 unter Anderem durch Aneinanderreihen des ersten Kopffelds HEA1 und des ersten Anwendungsdatenfeldes PAY1 erstellt. Der vierte Schritt S4 kann mit einer zehnten Einheit E10 implementiert und ausgeführt werden.

In einem fünften Schritt S5 wird die erste Nachricht N1 an das erste Netzwerk weitergeleitet. Der fünfte Schritt S5 kann mit einer elften Einheit E11 implementiert und ausgeführt werden.

Das Ablaufdiagramm endet im Zustand END.

Das Verfahren gemäß Figur 3 kann derart erweitert werden, dass im vierten Schritt das erste Anwendungsdatenfeld PAY1 der zweiten Nachricht N2 mittels des Dekomprimierungsverfahrens EXI dekodiert wird, falls das erste Anwendungsdatenfeld durch die Codiervorrichtung entsprechend codiert wurde. Diese Erweiterung ist mit einer zwölften Einheit E12 realisierbar.

Eine Decodiervorrichtung VD umfasst die Einheiten E7 bis E12 in der oben dargestellten Ausgestaltung.

Die Einheiten E1 bis E12 können als Software, Hardware oder in eine Kombination aus Soft- und Hardware realisiert und ausgeführt werden. Zumindest einige der Einheiten E1 bis E12 können auf einem Mikrocontroller mit gekoppeltem Speicher und verbundener Kommunikationsschnittstelle, beispielweise nach dem Standard WLAN (WLAN - Wireless Local Area Network) gemäß IEEE 802.11 (IEEE - Institute for Electrial and Electronics Engineers) realisiert sein.

### Literaturverzeichnis

[1] Chopan http://tools.ietf.org/pdf/draft-frank-61owpan-chopan-00.pdf
[2] W3C, EXI "Efficient XML Interchange", http://www.w3.org/tr/2009/cr-exi-20091208/
[3] IETF, Hypertext Transfer Protocol, Version HTTP/1.0, siehe RFC 1945, http://tools.ietf.org/html/rfc1945
[4] IETF, Hypertext Transfer Protocol, Version HTTP/1.1, siehe RFC 2616, http://tools.ietf.org/html/rfc2616
[5] W3C, Extensible Markup Language (XML) 1.0 (Fifth Edition), siehe http://www.w3.org/TR/2008/REC-xml-20081126/
[6] Information Technology - MPEG Systems Technologies - Part 1: Binary MPEG format for XML, ISO/IEC FDIS 23001 - 1:2005 (E), ISO/IEC JTC 1/SC 29/WG11, w7597, 4. November 2005

## Patentansprüche

1. Verfahren zum Herstellen einer Kommunikation zwischen zwei Netzwerken (NET1, NET2), mit folgenden Schritten:
Empfangen einer ersten Nachricht (N1) aus dem ersten Netzwerk (NET1), wobei die erste Nachricht (N1) ein erstes Kopffeld (HEA1) und ein erstes Anwendungsdatenfeld (PAY1) aufweist und
das erste Kopffeld (HEA1) Daten (DATA) gemäß dem Standard Hyper Text Transfer Protocol umfasst;
Codieren von zumindest einem der Felder (F1, F2) des ersten Kopffelds (HEA1) jeweils als Element (E) und/oder Attribut (A) auf Basis eines XML-Schemas (SC) in ein zweites Kopffeld (HEA2);
Codieren des zweiten Kopffelds (HEA2) in ein drittes Kopffeld (HEA3) auf Basis eines Komprimierungsverfahrens (EXI), wobei das Komprimierungsverfahren (EXI) ein Datenvolumen des zweiten Kopffeld (HEA2) reduziert;
Erstellen einer zweiten Nachricht (N2) aufweisend das dritte Kopffeld (HEA3) und das erste Anwendungsdatenfeld (PAY1);
Senden der zweiten Nachricht (N2) an das zweite Netwerk (NET2).

2. Verfahren nach Anspruch 1,
**dadurch gekennzeichnet, dass**
der erste Anwendungsdatenteil (PAY1) gemäß dem Komprimierungsverfahren (EXI) codiert wird.

3. Verfahren zum Herstellen einer Kommunikation zwischen zwei Netzwerken (NET1, NET2), mit folgenden Schritten:
Empfangen einer zweiten Nachricht (N2) aus einem zweiten Netzwerk (NET2), wobei die zweite Nachricht (N2) ein drittes Kopffeld (HEA3) und ein erstes Anwendungsdatenfeld (PAY1) aufweist und zumindest das dritte Kopffeld (HEA3) gemäß einem Komprimierungsverfahren (EXI) codiert ist;
Decodieren des dritten Kopffelds (HEA3) in ein zweites Kopffeld (HEA) auf Basis eines zum Komprimierungsverfahrens (EXI) korrespondierenden Dekomprimierungsverfahrens (DEXI);
Codieren von Elementen (E) und/oder Attributen (A) des zweiten Kopffelds (HEA2) auf Basis eines XML-Schemas (SC) in jeweilige Felder (F1, F2), wobei die Felder (F1, F2) eine Syntax gemäß dem Standard Hyper Text Transfer Protocol aufweisen und die Felder (F1, F2) ein erstes Kopffeld (HEA1) bilden;
Erstellen einer ersten Nachricht (N1) aufweisend das erste Kopffeld (HEA1) und das erste Anwendungsdatenfeld (PAY1);
Senden der ersten Nachricht (N1) an das erste Netwerk (NET1).

4. Verfahren nach Anspruch 3,
**dadurch gekennzeichnet, dass**
der erste Anwendungsdatenteil (PAY1) gemäß einem zum Komprimierungsverfahren (EXI) korrespondierenden Dekomprimierungsverfahren (DEXI) decodiert wird.

5. Verfahren nach einem der vorangehenden Ansprüchen, **dadurch gekennzeichnet, dass**
als Komprimierungsverfahren (EXI) ein Standard Efficient XML Interchange oder ein Binäres MPEG-Format für XML eingesetzt wird.

6. Codiervorrichtung (VC) zum Herstellen einer Kommunikation zwischen zwei Netzwerken (NET1, NET2), mit folgenden Einheiten:
Erste Einheit (E1) zum Empfangen einer ersten Nachricht (N1) aus dem ersten Netzwerk (NET1), wobei die erste Nachricht (N1) ein erstes Kopffeld (HEA1) und ein erstes Anwendungsdatenfeld (PAY1) aufweist und das erste Kopffeld (HEA1) Daten (DATA) gemäß dem Standard HyperText Transfer Protocol umfasst;
Zweite Einheit (E2) zum Codieren von zumindest einem der Felder (F1, F2) des ersten Kopffelds (HEA1) jeweils als Element (E) und/oder Attribut (A) auf Basis eines XML-Schemas (SC) in ein zweites Kopffeld (HEA2);
Dritte Einheit (E3) zum Codieren des zweiten Kopffelds (HEA2) in ein drittes Kopffeld (HEA3) auf Basis eines Komprimierungsverfahrens (EXI), wobei das Komprimierungsverfahren (EXI) ein Datenvolumen des zweiten Kopffeld (HEA2) reduziert;
Vierte Einheit (E4) zum Erstellen einer zweiten Nachricht (N2) aufweisend das dritte Kopffeld (HEA3) und das erste Anwendungsdatenfeld (PAY1);
Fünfte Einheit (E5) zum Senden der zweiten Nachricht (N2) an das zweite Netwerk (NET2).

7. Codiervorrichtung (VC) nach Anspruch 6,
das ferner eine sechste Einheit (E6) umfasst, die derart ausgestaltet ist, dass damit Erweiterungen des Verfahrens nach Anspruch 2 oder 5 ausführbar sind.

8. Decodiervorrichtung (VD) zum Herstellen einer Kommunikation zwischen zwei Netzwerken (NET1, NET2), mit folgenden Einheiten:
Siebte Einheit (E7) zum Empfangen einer zweiten Nachricht (N2) aus einem zweiten Netzwerk (NET2), wobei die zweite Nachricht (N2) ein drittes Kopffeld (HEA3) und ein erstes Anwendungsdatenfeld (PAY1) aufweist und zumindest das dritte Kopffeld (HEA3) gemäß einem Komprimierungsverfahren (EXI) codiert ist;
Achte Einheit (E8) zum Decodieren des dritten Kopffelds (HEA3) in ein zweites Kopffeld (HEA) auf Basis eines zum Komprimierungsverfahrens (EXI) korrespondierenden Dekomprimierungsverfahrens (DEXI);
Neunte Einheit (E9) zum Codieren von Elementen (E) und/oder Attributen (A) des zweiten Kopffelds (HEA2) auf Basis eines XML-Schemas (SC) in jeweilige Felder (F1, F2), wobei die Felder (F1, F2) eine Syntax gemäß dem Standard HyperText Transfer Protocol aufweisen und die Felder (F1, F2) ein erstes Kopffeld (HEA1) bilden;
Zehnte Einheit (E10) zum Erstellen einer ersten Nachricht (N1) aufweisend das erste Kopffeld (HEA1) und das erste Anwendungsdatenfeld (PAY1);
Elfte Einheit (E11) zum Senden der ersten Nachricht (N1) an das erste Netwerk (NET1).

9. Decodiervorrichtung (VD) nach Anspruch 8,
das ferner eine zwölfte Einheit (E12) umfasst, die derart ausgestaltet ist, dass damit Erweiterungen des Verfahrens nach Anspruch 4 oder 5 ausführbar sind.

## Claims

1. Method for establishing a communication between two networks (NET1, NET2), having the following steps:
Receiving a first message (N1) from the first network (NET1),
the first message (N1) having a first header field (HEA1) and
a first application data field (PAY1) and the first header field (HEA1) comprising data (DATA) in accordance with the Hyper Text Transfer Protocol standard;
Encoding at least one of the fields (F1, F2) of the first header field (HEA1) in each case as an element (E) and/or
attribute (A) on the basis of an XML schema (SC) into a second header field (HEA2);
Encoding the second header field (HEA2) into a third header field (HEA3) on the basis of a compression method (EXI), the compression method (EXI) reducing a volume of data of the second header field (HEA2);
Generating a second message (N2) having the third header field (HEA3) and the first application data field (PAY1);
Transmitting the second message (N2) to the second network (NET2).

2. Method according to claim 1,
**characterised in that**
the first application data part (PAY1) is encoded according to the compression method (EXI).

3. Method for establishing a communication between two networks (NET1, NET2), having the following steps:
Receiving a second message (N2) from a second network (NET2),
the second message (N2) having a third header field (HEA3) and
a first application data field (PAY1) and at least the third header field (HEA3) being encoded according to a compression method (EXI);
Decoding the third header field (HEA3) into a second header field (HEA) on the basis of a decompression method (DEXI) corresponding to the compression method (EXI);
Encoding elements (E) and/or attributes (A) of the second header field (HEA2) on the basis of an XML schema (SC) into respective fields (F1, F2), the fields (F1, F2) having a syntax according to the Hyper Text Transfer Protocol standard and the fields (F1, F2) forming a first header field (HEA1);
Generating a first message (N1) having the first header field (HEA1) and the first application data field (PAY1);
Transmitting the first message (N1) to the first network (NET1).

4. Method according to claim 3,
**characterised in that**
the first application data part (PAY1) is decoded according to a decompression method (DEXI) corresponding to the compression method (EXI).

5. Method according to one of the preceding claims, **characterised in that**
an Efficient XML Interchange standard or a binary MPEG format for XML is used as a compression method (EXI).

6. Encoding device (VC) for establishing a communication between two networks (NET1, NET2), having the following units:
First unit (E1) for receiving a first message (N1) from the first network (NET1), the first message (N1) having a first header field (HEA1) and a first application data field (PAY1) and the first header field (HEA1) comprising data (DATA) according to the Hyper Text Transfer Protocol standard;
Second unit (E2) for encoding at least one of the fields (F1, F2) of the first header field (HEA1) in each case as an element (E) and/or attribute (A) on the basis of an XML schema (SC) into a second header field (HEA2);
Third unit (E3) for encoding the second header field (HEA2) into a third header field (HEA3) on the basis of a compression method (EXI), the compression method (EXI) reducing a volume of data of the second header field (HEA2);
Fourth unit (E4) for generating a second message (N2) having the third header field (HEA3) and the first application data field (PAY1);
Fifth unit (E5) for transmitting the second message (N2) to the second network (NET2).

7. Encoding device (VC) according to claim 6,
further comprising a sixth unit (E6), which is configured such that extensions of the method according to claim 2 or 5 can be executed.

8. Decoding device (VD) for establishing a communication between two networks (NET1, NET2), having the following units:
Seventh unit (E7) for receiving a second message (N2) from a second network (NET2), the second message (N2) having a third header field (HEA3) and a first application data field (PAY1) and at least the third header field (HEA3) being encoded according to a compression method (EXI);
Eighth unit (E8) for decoding the third header field (HEA3) into a second header field (HEA) on the basis of a decompression method (DEXI) corresponding to the compression method (EXI);
Ninth unit (E9) for encoding elements (E) and/or attributes (A) of the second header field (HEA2) on the basis of an XML schema (SC) into respective fields (F1, F2), the fields (F1, F2) having a syntax according to the Hyper Text Transfer Protocol standard and the fields (F1, F2) forming a first header field (HEA1) ;
Tenth unit (E10) for generating a first message (N1), having the first header field (HEA1) and the first application data field (PAY1);
Eleventh unit (E11) for transmitting the first message (N1) to the first network (NET1).

9. Decoding device (VD) according to claim 8,
further comprising a twelfth unit (E12) which is configured such that extensions of the method according to claim 4 or 5 can be executed.

## Revendications

1. Procédé pour établir une communication entre deux réseaux (NET1, NET2), comportant les étapes suivantes :
- réception d'un premier message (N1) à partir du premier réseau (NET1), le premier message (N1) comportant un premier champ d'en-tête (HEA1) et un premier champ de données d'application (PAY1) et le premier champ d'en-tête (HEA1) comprenant des données (DATA) selon la norme Hyper Text Transfer Protocol ;
- codage, en un deuxième champ d'en-tête (HEA2), d'au moins l'un des champs (F1, F2) du premier champ d'entête (HEA1) respectivement en tant qu'élément (E) et/ou attribut (A) sur la base d'un schéma XML (SC) ;
- codage du deuxième champ d'en-tête (HEA2) en un troisième champ d'en-tête (HEA3) sur la base d'un procédé de compression (EXI), le procédé de compression (EXI) réduisant un volume de données du deuxième champ d'en-tête (HEA2) ;
- création d'un deuxième message (N2) comportant le troisième champ d'en-tête (HEA3) et le premier champ de données d'application (PAY1) ;
- envoi du deuxième message (N2) au deuxième réseau (NET2).

2. Procédé selon la revendication 1, **caractérisé en ce que** la première partie de données d'application (PAY1) est codée selon le procédé de compression (EXI).

3. Procédé pour établir une communication entre deux réseaux (NET1, NET2), comportant les étapes suivantes :
- réception d'un deuxième message (N2) à partir d'un deuxième réseau (NET2), le deuxième message (N2) comportant un troisième champ d'en-tête (HEA3) et un premier champ de données d'application (PAY1) et au moins le troisième champ d'en-tête (HEA3) étant codé selon un procédé de compression (EXI) ;
- décodage du troisième champ d'en-tête (HEA3) en un deuxième champ d'en-tête (HEA) sur la base d'un procédé de décompression (DEXI) correspondant au procédé de compression (EXI) ;
- codage d'éléments (E) et/ou d'attributs (A) du deuxième champ d'en-tête (HEA2) sur la base d'un schéma XML (SC) en champs (F1, F2) respectifs, les champs (F1, F2) présentant une syntaxe selon la norme Hyper Text Transfer Protocol et les champs (F1, F2) formant un premier champ d'en-tête (HEA1) ;
- création d'un premier message (N1) comportant le premier champ d'en-tête (HEA1) et le premier champ de données d'application (PAY1) ;
- envoi du premier message (N1) au premier réseau (NET1).

4. Procédé selon la revendication 3, **caractérisé en ce que** la première partie de données d'application (PAY1) est décodée selon un procédé de décompression (DEXI) correspondant au procédé de compression (EXI).

5. Procédé selon l'une des revendications précédentes, **caractérisé en ce que** sont utilisés, en tant que procédé de compression (EXI), une norme Efficient XML Interchange ou un format binaire MPEG pour XML.

6. Dispositif de codage (VC) pour établir une communication entre deux réseaux (NET1, NET2), comportant les unités suivantes :
- une première unité (E1) pour recevoir un premier message (N1) à partir du premier réseau (NET1), le premier message (N1) comportant un premier champ d'entête (HEA1) et un premier champ de données d'application (PAY1) et le premier champ d'en-tête (HEA1) comprenant des données (DATA) selon la norme HyperText Transfer Protocol ;
- une deuxième unité (E2) pour coder en un deuxième champ d'en-tête (HEA2) au moins l'un des champs (F1, F2) du premier champ d'en-tête (HEA1) respectivement en tant qu'élément (E) et/ou attribut (A) sur la base d'un schéma XML (SC) ;
- une troisième unité (E3) pour coder le deuxième champ d'en-tête (HEA2) en un troisième champ d'en-tête (HEA3) sur la base d'un procédé de compression (EXI), le procédé de compression (EXI) réduisant un volume de données du deuxième champ d'en-tête (HEA2) ;
- une quatrième unité (E4) pour créer un deuxième message (N2) comportant le troisième champ d'en-tête (HEA3) et le premier champ de données d'application (PAY1) ;
- une cinquième unité (E5) pour envoyer le deuxième message (N2) au deuxième réseau (NET2).

7. Dispositif de codage (VC) selon la revendication 6, comprenant en outre une sixième unité (6) qui est réalisée de manière telle qu'elle permet d'exécuter des extensions du procédé selon la revendication 2 ou 5.

8. Dispositif de décodage (VD) pour établir une communication entre deux réseaux (NET1, NET2), comportant les unités suivantes :
- une septième unité (E7) pour recevoir un deuxième message (N2) à partir d'un deuxième réseau (NET2), le deuxième message (N2) comportant un troisième champ d'en-tête (HEA3) et un premier champ de données d'application (PAY1) et au moins le troisième champ d'en-tête (HEA3) étant codé selon un procédé de compression (EXI) ;
- une huitième unité (E8) pour décoder le troisième champ d'en-tête (HEA3) en un deuxième champ d'en-tête (HEA) sur la base d'un procédé de décompression (DEXI) correspondant au procédé de compression (EXI) ;
- une neuvième unité (E9) pour coder des éléments (E) et/ou des attributs (A) du deuxième champ d'en-tête (HEA2) sur la base d'un schéma XML (SC) en champs (F1, F2) respectifs, les champs (F1, F2) présentant une syntaxe selon la norme HyperText Transfer Protocol et les champs (F1, F2) formant un premier champ d'en-tête (HEA1) ;
- une dixième unité (E10) pour créer un premier message (N1) comportant le premier champ d'en-tête (HEA1) et le premier champ de données d'application (PAY1) ;
- une onzième unité (E11) pour envoyer le premier message (N1) au premier réseau (NET1).

9. Dispositif de décodage (VD) selon la revendication 8, lequel comporte en outre une douzième unité (E12) qui est réalisée de manière telle qu'elle permet d'exécuter des extensions du procédé selon la revendication 4 ou 5.
